# EUROPEAN PATENT APPLICATION

(11) **EP 4 653 299 A1**
(43) Date of publication of application: **26.11.2025**
(21) Application number: 25170841.8
(22) Date of filing: 15.04.2025
(51) Int. Cl.: B62J 9/12, B60K 15/04, B60L 53/16, B62J 17/06

(54) **STORAGE COMPARTMENT OF STRADDLE VEHICLE WITH LID AND FUEL FILLER OR CONNECTION PORT**

(30) Priority: 24.05.2024 JP 2024084536
(71) Applicant: Suzuki Motor Corporation, Shizuoka 432-8611 (JP)
(72) Inventor: KUNO, Masaaki, Hamamatsu-shi (JP)
(74) Representative: Haseltine Lake Kempner LLP

(57) **Abstract**

A lid structure (30) for a vehicle (1) in which a fuel tank or a battery (26) is provided. The lid structure (30) includes a tray (31) configured to cover a periphery of a fuel filler of the fuel tank or a connection port (27) of the battery, and a lid (41) configured to open and close an opening of the tray through which the fuel filler or the connection port (27) is exposed. A protrusion (62) protrudes from a part (34) of an inner peripheral surface of the tray (31) to lock the lid (41). The part (34) of the inner peripheral surface of the tray (31) is inclined so as to be away from a center line (L1) of the fuel filler or the connection port (27), toward an inner bottom surface (32) of the tray (31).

## Description

### TECHNICAL FIELD

The present disclosure relates to a lid structure.

### BACKGROUND ART

A straddle-type vehicle or the like including a fuel lid that covers the fuel filler of a fuel tank is known (for example, see JP2004-175312A). The base end portion of the fuel lid described in JP2004-175312A is swingably supported on a fuel tray, and a hook piece is provided at the open end of the fuel lid. A protrusion of a locking mechanism protrudes inward from the opening edge of the fuel tray, and the fuel lid is locked by hooking the hook piece of the fuel lid onto the protrusion of the locking mechanism. The protrusion of the locking mechanism comes off from the hook piece of the fuel lid, whereby the fuel lid is unlocked.

In the lid structure described in JP2004-175312A, since the protrusion of the locking mechanism protrudes inward from the opening edge of the fuel tray, the protrusion comes into contact with the hand and becomes an obstacle at the time of attaching and detaching a fuel filler cap. In order to prevent the protrusion from coming into contact with the hand, it is necessary to ensure a large clearance between the fuel filler and the protrusion. Such a problem also occurs when an electrical connector is connected to a connection port such as a charging port or a power supply port.

### SUMMARY OF INVENTION

Aspect of non-limiting embodiments of the present disclosure relates to provide a lid structure capable of improving the workability by ensuring a working space inside a tray.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a lid structure for a vehicle in which a fuel tank or a battery is provided, the lid structure including:
a tray configured to cover a periphery of a fuel filler of the fuel tank or a connection port of the battery; and
a lid configured to open and close an opening of the tray through which the fuel filler or the connection port is exposed,
in which a protrusion protrudes from a part of an inner peripheral surface of the tray to lock the lid, and
the part of the inner peripheral surface of the tray is inclined so as to be away from a center line of the fuel filler or the connection port toward an inner bottom surface of the tray.

### BRIEF DESCRIPTION OF DRAWINGS

Exemplary embodiment(s) of the present invention will be described in detail based on the following figures, wherein:
FIG. 1 is a side view of a straddle-type vehicle according to the present embodiment;
FIG. 2 is a rear view of a lid structure according to the present embodiment;
FIG. 3 is a cross-sectional view of the lid structure in FIG. 2 taken along a line A-A;
FIG. 4 shows the positional relationship between a lid and a charging port according to the present embodiment;
FIG. 5A is an operation transition view of the locking operation of the lid according to the present embodiment; and
FIG. 5B is an operation transition view of the locking operation of the lid according to the present embodiment.

### DESCRIPTION OF EMBODIMENTS

A fuel tank or a battery is provided in a vehicle according to an aspect of the present disclosure. In a lid structure of the vehicle, a periphery of a fuel filler of the fuel tank or a connection port of the battery is covered with a tray, and an opening of the tray through which the fuel filler or the connection port is exposed is opened and closed by a lid. The lid is locked to a protrusion that protrudes from a part of an inner peripheral surface of the tray. A part of the inner peripheral surface of the tray is inclined so as to be away from a center line of the fuel filler or the connection port toward an inner bottom surface of the tray. The protrusion is inclined by the inclination of the part of the inner peripheral surface of the tray, and the hand of the operator or the like is less likely to hit the protrusion at the time of attaching and detaching the fuel filler cap or connecting the electrical connector, thereby improving the workability. The clearance between the fuel filler or the connection port and the protrusion can be reduced, and the fuel filler or the connection port and the protrusion can be compactly provided.

### Embodiment

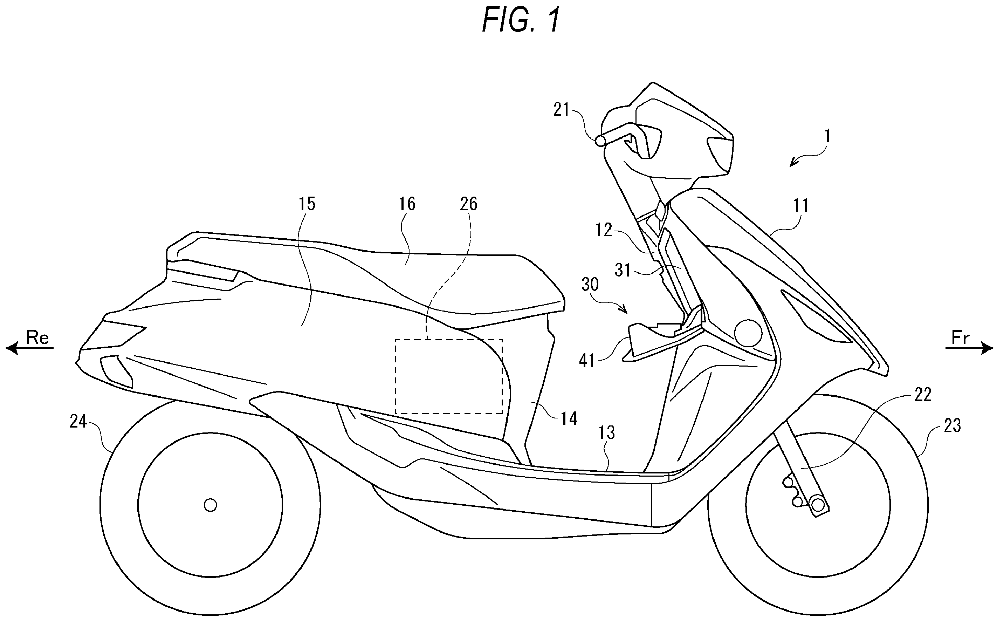

Hereinafter, a straddle-type vehicle according to an embodiment will be described with reference to the accompanying drawings. FIG. 1 is a side view of the straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

As shown in FIG. 1, a straddle-type vehicle 1 is equipped with various covers that are vehicle body exteriors on an underbone vehicle body frame (not shown). The straddle-type vehicle 1 is provided with a front cover 11 on the vehicle front side, and a front leg shield 12, which protects feet of a rider, on the rear side of the front cover 11. A floor board 13 extends rearward from the lower end of the front leg shield 12, and a body cover 14 and a pair of side covers 15 are provided on the rear side of the floor board 13. A seat 16 is provided on the upper portion of the side cover 15, and a battery 26 is provided below the seat 16.

A handle 21 is provided on the upper side of the front cover 11, and a front wheel 23 is rotatably supported via a pair of front forks 22 on the lower side of the front cover 11. A swing arm (not shown) with a motor (not shown) is provided on the lower side of the side cover 15. The swing arm is swingably coupled to the vehicle body frame. A rear wheel 24 is rotatably supported on the rear portion of the swing arm. The swing arm has a left side surface covered with a swing arm cover (not shown). Power is transmitted from the motor to the rear wheel 24 via a belt-type continuously variable transmission (not shown) inside the swing arm cover.

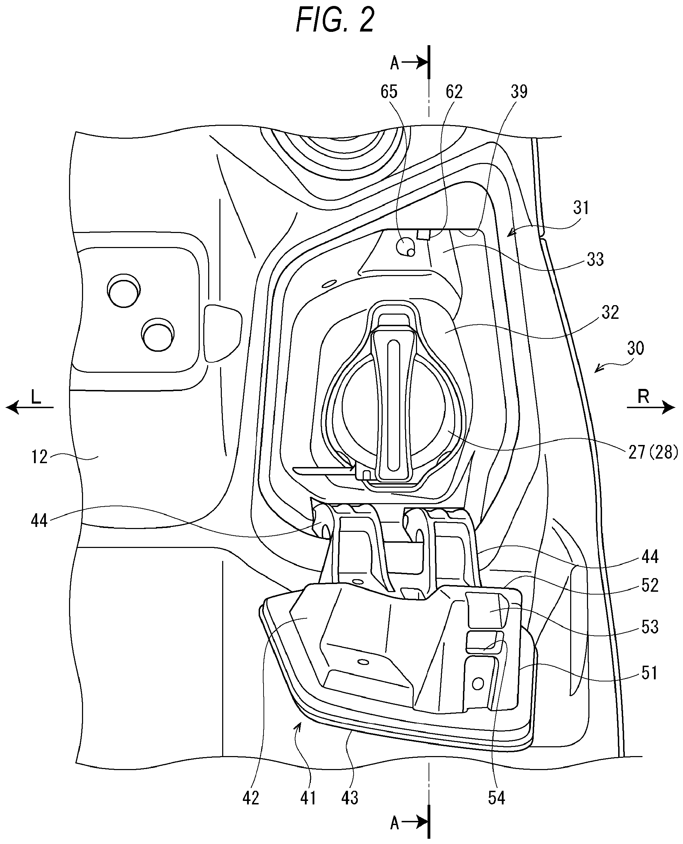

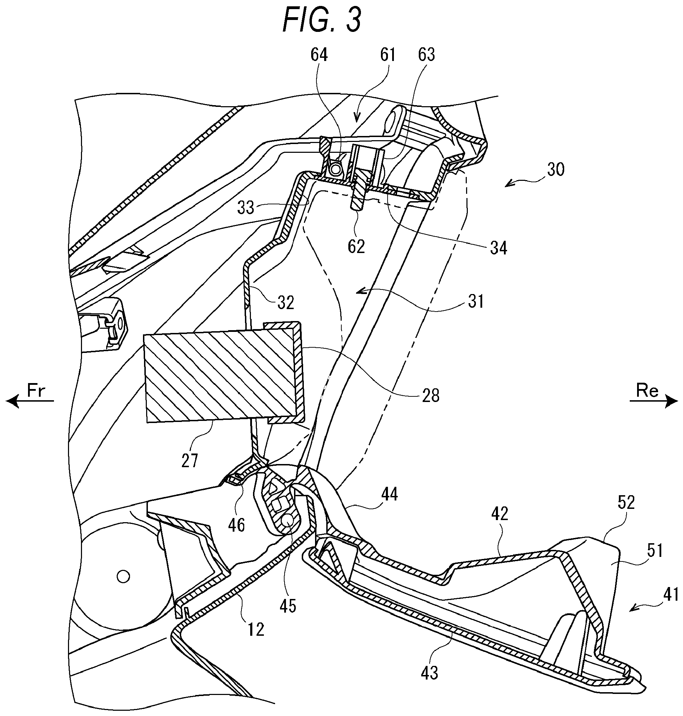

A tray 31 that accommodates a charging port 27 (see FIG. 2) for the battery 26 is provided on the upper right side of the front leg shield 12. A lid 41 is coupled to the lower side portion of the opening edge of the tray 31 so as to be openable downward. The opening of the lid 41 is closed, thereby preventing the exposure of the charging port 27. In such a lid structure 30, a locking mechanism 61 (see FIG. 3) is provided on the upper wall of the tray 31, and the locking mechanism 61 is provided with a lock pin 62 for hooking the open end of the lid 41. The lid 41 is locked by being hooked to the lock pin 62, and the lock is released by removing the lid 41 from the lock pin 62.

A lock pin of a general locking mechanism protrudes in the normal direction orthogonal to the center line of a charging port. Therefore, the clearance between the lock pin and the charging port becomes narrow, and the lock pin interferes, making it difficult to connect the electrical connector to the charging port. It is also difficult to ensure a wide clearance between the lock pin and the charging port. When the lid is opened, the lock pin is exposed to the outside, and the appearance deteriorates. Therefore, in the present embodiment, by inclining the lock pin toward the inner bottom surface of the tray, the workability of connecting the electrical connector is improved and the deterioration of the appearance due to the exposure of the protrusion is prevented.

The lid structure of the straddle-type vehicle will be described with reference to FIGS. 2 and 3. FIG. 2 is a rear view of the lid structure according to the present embodiment. FIG. 3 is a cross-sectional view of the lid structure in FIG. 2 taken along a line A-A.

As shown in FIGS. 2 and 3, the tray 31 that is recessed forward is provided on the upper right side of the front leg shield 12. The charging port 27 is exposed from an inner bottom surface 32 of the tray 31, and a waterproof cap 28 is detachably attached to the charging port 27. A battery cable extends from the charging port 27 toward the battery 26 (see FIG. 1) at the vehicle rear portion, and the charging port 27 is connected to the battery 26 via the battery cable. The battery 26 is charged by connecting the electrical connector of the external power supply to the charging port 27. The periphery of the charging port 27 is covered with the tray 31, which prevents the foreign matter such as dust and water droplets from entering the vehicle body.

The waterproof cap 28 (the charging port 27) is exposed through the opening of the tray 31. The lid 41 that covers the opening of the tray 31 from the rear is provided below the tray 31. The lid 41 is coupled to the lower surface of the tray 31 so as to be openable downward. The lid 41 includes a lid body 42 corresponding to the recess of the tray 31 and a lid cover 43 that is provided on the back surface of the lid body 42. A pair of lid arms 44 extend in a C shape from the lower portion of the lid body 42. The distal end portions of the pair of lid arms 44 are coupled to the tray 31 via coupling shafts 45. A restricting piece 46 is provided in the curved portion of the pair of lid arms 44. The restricting piece 46 is configured to abut against the tray 31 to restrict the opening of the lid 41.

The lid 41 is swung up and down about the coupling shaft 45 as a fulcrum so as to take a standing posture in which the tray 31 is covered and a lying down posture in which the tray 31 is opened. In the closed state of the lid 41, the lid 41 is locked in the standing posture by the lock pin 62 of the locking mechanism 61. The tray 31 and the charging port 27 are covered with the lid cover 43, and the design is improved. In the open state of the lid 41, the restricting piece 46 of the lid 41 is hooked to the tray 31, and the lid 41 is supported in the lying down posture. Since the lid 41 is laid down below the opening of the tray 31, the waterproof cap 28 is completely exposed from the opening of the tray 31 in the rear view, and the waterproof cap 28 is easily attached and detached.

The upper wall of the tray 31 is recessed outward (upward) to form a recess 33. The open end side of the lid body 42 bulges to form a bulging portion 51 configured to enter the recess 33 of the tray 31. In the open state of the lid 41, the distal end of the bulging portion 51 faces upward. A flat surface 52 is formed at the distal end of the bulging portion 51. In the open state of the lid 41, one side surface of the bulging portion 51 faces rearward (the front side of the paper surface of FIG. 2). An inclined surface 53 that is inclined forward toward the distal end is formed on the one side surface of the bulging portion 51. A lock hole 54 into which the lock pin 62 of the locking mechanism 61 is inserted is formed on the one side surface of the bulging portion 51 below the inclined surface 53.

An elastic protrusion 65 is provided on the back surface of the recess 33 of the tray 31. The elastic protrusion 65 protrudes toward the opening of the tray 31. The locking mechanism 61 including the lock pin 62 is provided on the upper wall of the recess 33. The lock pin 62 protrudes from the upper surface 34 of the recess 33 so as to sink inside the recess 33. The elastic protrusion 65 is provided at a position where the elastic protrusion 65 can come into contact with the flat surface 52 of the bulging portion 51. The lock pin 62 is provided at a position where the lock pin 62 can come into contact with the inclined surface 53 of the bulging portion 51. Therefore, when the lid 41 is closed, the elastic protrusion 65 abuts against the flat surface 52 of the bulging portion 51 and is crushed, and the lock pin 62 abuts against the inclined surface 53 of the bulging portion 51 and sinks.

As shown by the imaginary line in FIG. 3, in a case where the lid 41 is locked in the closed state, the elastic protrusion 65 abuts against the flat surface 52 of the bulging portion 51 from the front, and the lock pin 62 enters the lock hole 54 of the bulging portion 51 from above. The elastic protrusion 65 is crushed by the flat surface 52 of the bulging portion 51, and the elastic protrusion 65 is pressed against the bulging portion 51 by the repulsive force of the elastic protrusion 65. The base end portion of the lock pin 62 enters a body portion 63 of the locking mechanism 61. The lock pin 62 is pushed into the lock hole 54 of the bulging portion 51 by a torsion spring 64 in the body portion 63. In the closed state of the lid 41, the lid 41 is locked by the lock pin 62 against the repulsive force of the elastic protrusion 65.

A key cylinder or the like is connected to the locking mechanism 61 via a cable (not shown). When the lock pin 62 is pulled out from the lock hole 54 of the bulging portion 51 by the cable operation, the lid 41 is unlocked. When the lid 41 is unlocked, the lid 41 is pushed out in the opening direction by the repulsive force of the elastic protrusion 65, and the lid 41 is opened downward by the own weight thereof. In the lid structure 30 according to the present embodiment, the tray 31 is partially recessed and the locking mechanism 61 is provided. Accordingly, it is not necessary to expand the tray 31 more than necessary, and the charging port 27 and the locking mechanism 61 can be compactly provided.

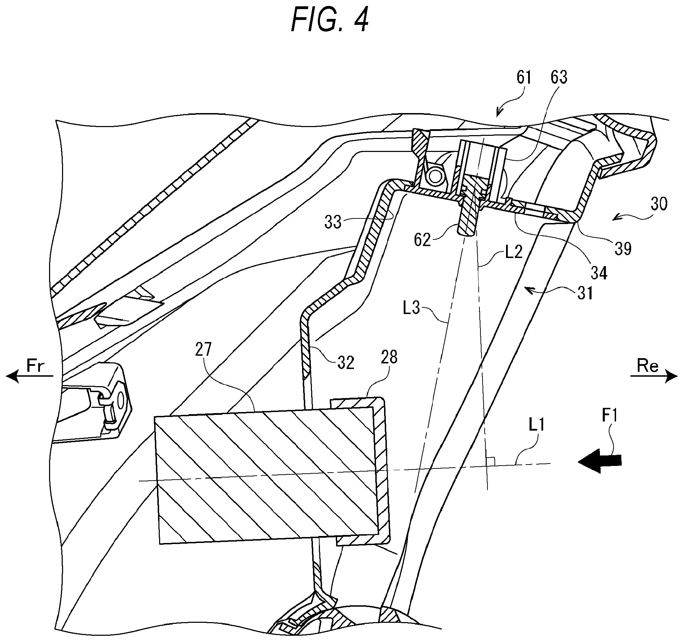

The positional relationship between the lid and the charging port will be described with reference to FIG. 4. FIG. 4 shows the positional relationship between the lid and the charging port according to the present embodiment.

As shown in FIG. 4, the locking mechanism 61 that can hook the lid 41 (see FIG. 3) in the closed state is provided in the tray 31 (the recess 33). The body portion 63 of the locking mechanism 61 forms an upper surface 34 of the recess 33. The lock pin 62 of the locking mechanism 61 protrudes in the downward direction that is perpendicular to the upper surface 34 of the recess 33. The cylindrical charging port 27 protrudes from the inner bottom surface 32 of the tray 31. A center line L1 of the charging port 27 in the axial direction is slightly inclined with respect to the horizontal line. The upper surface 34 of the recess 33 is inclined upward and away from the center line L1 of the charging port 27 toward the inner bottom surface 32. The lock pin 62 is slightly inclined toward the inner bottom surface 32 of the tray 31 by the inclination of the upper surface 34 of the recess 33.

The upper surface 34 of the recess 33 is inclined from the upper edge (the opening edge) 39 of the tray 31 toward the inner bottom surface 32. The lock pin 62 is located closer to the inner bottom surface 32 side (the front side) than to an upper edge 39 of the tray 31. The upper surface 34 of the recess 33 becomes higher from the upper edge 39 of the tray 31 toward the inner bottom surface 32. The base end portion of the lock pin 62 is positioned higher than the upper edge 39 of the tray 31. Therefore, when viewed from an insertion direction F1 into the charging port 27, the protrusion amount of the lock pin 62 from the upper edge 39 of the tray 31 is reduced. When the electrical connector is brought close to the charging port 27 from the insertion direction F1, the lock pin 62 is less likely to hit the hand, and the workability of connecting the electrical connector is improved.

Most of the lock pin 62 is hidden inside the tray 31 by the inclination of the upper surface 34 of the recess 33, and only the distal end portion of the lock pin 62 is exposed from the upper edge 39 of the tray 31 (see FIG. 2). Normally, since the charging port 27 is lower than the height of the eyes of the operator, the operator looks down at the charging port 27 from above. When the operator looks down at the charging port 27, since the upper surface 34 of the recess 33 is located in a blind spot from the operator, the lock pin 62 that protrudes downward from the upper surface 34 of the recess 33 is less noticeable. In this way, the exposure of the lock pin 62 from the upper edge 39 of the tray 31 is prevented, and the appearance is improved.

At this time, the upper surface 34 of the recess 33 is inclined with respect to the center line L1 of the charging port 27, so that a protruding direction L3 of the lock pin 62 is inclined toward the inner bottom surface 32 of the tray 31 with respect to a normal direction L2 of the center line L1 of the charging port 27. In this case, the protruding direction L3 of the lock pin 62 is preferably inclined in a range of 10 degrees or more and 20 degrees or less with respect to the normal direction L2 of the center line L1 of the charging port 27. In the present embodiment, the upper surface 34 of the recess 33 is inclined by 14 degrees with respect to the center line L1 of the charging port 27, so that the protruding direction L3 of the lock pin 62 is inclined by 14 degrees with respect to the normal direction L2 of the center line L1 of the charging port 27.

The lock pin 62 is inclined toward the inner bottom surface 32 of the tray 31. Accordingly, when the electrical connector is inserted into the charging port 27, even if the hand of the operator or the electrical connector comes into contact with the lock pin 62, the hand or the electrical connector is less likely to be caught. On the other hand, since the lock pin 62 is directed toward the inner bottom surface 32 of the tray 31, the degree of engagement between the lock hole 54 of the lid 41 and the lock pin 62 is increased, making it difficult to pry open the lid 41. The lock pin 62 is inclined such that the front is downward, even if the foreign matter such as dust enters the inside of the tray 31 through a gap or the like between the lid 41 and the tray 31, the foreign matter is less likely to adhere to the lock pin 62.

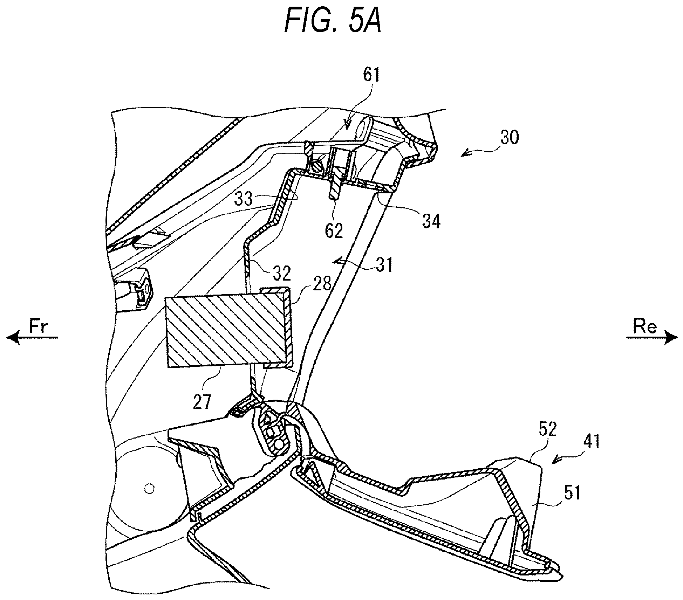

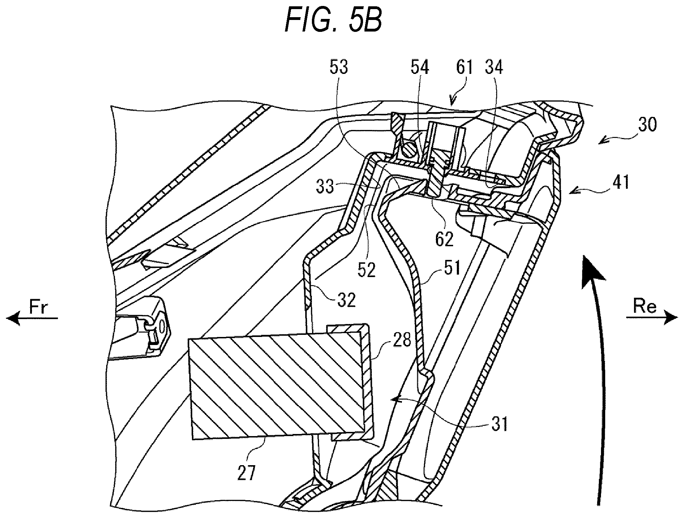

The locking operation of the lid will be described with reference to FIGS. 5A and 5B. FIGS. 5A and 5B are operation transition views of the locking operation of the lid according to the present embodiment.

As shown in FIG. 5A, in a state in which the lid 41 is opened downward, the opening of the tray 31 is opened, and the charging port 27 faces rearward. The lock pin 62 protrudes from the upper surface 34 of the recess 33 of the tray 31. As described above, since the lock pin 62 is inclined toward the inner bottom surface 32 of the tray 31, the lock pin 62 is less likely to be caught by the hand of the operator or the electrical connector when the electrical connector is connected, and the work of connecting the electrical connector is less likely to be hindered. When the operator looks down at the charging port 27, the lock pin 62 is hidden inside the tray 31, thereby improving the appearance.

As shown in FIG. 5B, when the lid 41 is lifted from the downwardly opened state, the lock pin 62 is pushed in the retracting direction by the inclined surface 53 of the bulging portion 51 of the lid 41, and the bulging portion 51 enters the recess 33 of the tray 31. At this time, the elastic protrusion 65 (see FIG. 2) abuts against the flat surface 52 of the bulging portion 51, and the repulsive force is applied to the lid 41. When the lid 41 is completely closed, the lock pin 62 comes off the inclined surface 53 of the bulging portion 51, and the lock pin 62 enters the lock hole 54 of the bulging portion 51. Accordingly, the lid 41 is locked in the closed state by the lock pin 62 against the repulsive force of the elastic protrusion 65.

As described above, according to the lid structure 30 of the straddle-type vehicle 1 in the present embodiment, the lock pin 62 is inclined by the inclination of the upper surface 34 of the tray 31 (the recess 33). Since the lock pin 62 moves away from the center line L1 of the charging port 27 toward the inner bottom surface 32 of the tray 31, the hand of the operator or the like is less likely to hit the lock pin 62 when the electrical connector is connected, and the workability is improved. The clearance between the charging port 27 and the lock pin 62 can be reduced, and the charging port 27 and the lock pin 62 can be compactly provided.

In the present embodiment, the lock pin serving as the protrusion protrudes downward from the upper surface of the tray, but it is sufficient that the protrusion protrudes from a part of the inner peripheral surface of the tray. For example, the protrusion may protrude upward from the lower surface of the tray, and the lid that opens upward may be locked by the protrusion.

In the present embodiment, the tray is provided with the locking mechanism. Alternatively, the lid may also be provided with the locking mechanism. For example, the protrusion may protrude inward from the inner peripheral surface of the tray, and the movable hook may be provided in the locking mechanism of the lid. In this case, the movable hook is caught on the protrusion, so that the lid is locked in the closed state.

In the present embodiment, the battery is provided in the straddle-type vehicle. Alternatively, the fuel tank may be provided in the straddle-type vehicle. In this case, the periphery of the fuel filler of the fuel tank is covered with the tray, and the opening of the tray from which the fuel filler is exposed is covered with the lid. Even in the configuration in which the fuel tank is provided instead of the battery, the hand of the operator or the like is less likely to hit the lock pin at the time of attaching and detaching the fuel filler cap, and the workability is improved. The fuel tank is not limited to storing the fuel oil, and may store other fuels such as hydrogen.

In the present embodiment, the battery connection port is a charging port of a charging receptacle terminal or the like. Alternatively, the battery connection port may be a power supply port of a power supply socket terminal or the like.

In the present embodiment, the tray is provided on the front leg shield, but the installation position of the tray is not particularly limited. For example, the tray may be provided at the vehicle body rear portion or the vehicle body side portion.

The lid structure according to the present embodiment is not limited to being used in the above-described straddle-type vehicle, and may be used in another vehicle such as a four-wheeled motor vehicle. The straddle-type vehicle is not limited to a general vehicle in which a driver rides on a seat in a posture of straddling the seat, and includes a scooter-type vehicle in which the driver rides on the seat without straddling the seat.

As described above, a first aspect provides a lid structure (30) for a vehicle (a straddle-type vehicle 1) in which a fuel tank or a battery (26) is provided, the lid structure (30) including: a tray (31) configured to cover a periphery of a fuel filler of the fuel tank or a connection port (a charging port 27) of the battery; and a lid (41) configured to open and close an opening of the tray through which the fuel filler or the connection port is exposed, in which a protrusion (a lock pin 62) protrudes from a part (an upper surface 34) of an inner peripheral surface of the tray to lock the lid, and in which the part of the inner peripheral surface of the tray is inclined so as to be away from a center line (L1) of the fuel filler or the connection port toward an inner bottom surface (32) of the tray. According to this configuration, the protrusion is inclined by the inclination of the part of the inner peripheral surface of the tray. Since the protrusion moves away from the center line of the fuel filler or the connection port toward the inner bottom surface of the tray, the hand of the operator or the like is less likely to hit the protrusion at the time of attaching and detaching the fuel filler cap or connecting the electrical connector, thereby improving the workability. The clearance between the fuel filler or the connection port and the protrusion can be reduced, and the fuel filler or the connection port and the protrusion can be compactly provided.

A second aspect is directed to the first aspect, in which the part of the inner peripheral surface of the tray is inclined from an opening edge (an upper edge 39) of the tray toward the inner bottom surface of the tray. According to this configuration, when viewed from the insertion direction into the fuel filler or the connection port, the protrusion amount of the protrusion from the opening edge is reduced, and the work of attaching and detaching the fuel filler cap and the work of connecting the electrical connector are less likely to be hindered. The exposure of the protrusion from the opening edge is prevented, and the appearance is improved.

A third aspect is directed to the first aspect or the second aspect, in which the part of the inner peripheral surface of the tray is an upper surface of the tray, and in which the upper surface of the tray is inclined upward and away from the center line of the fuel filler or the connection port toward the inner bottom surface of the tray. According to this configuration, since the operator normally looks down at the fuel filler and the connection port and the upper surface of the tray is located in a blind spot from the operator, the protrusion that protrudes downward from the upper surface of the tray is less noticeable, and the appearance is improved. Even if the foreign matter such as dust enters the inside of the tray, the foreign matter is less likely to adhere to the protrusion.

A fourth aspect is directed to any one of the first to third aspects, in which a protruding direction (L3) of the protrusion is inclined toward the inner bottom surface of the tray with respect to a normal direction (L2) of the center line of the fuel filler or the connection port. According to this configuration, even if the hand of the operator or the like comes into contact with the protrusion, the hand of the operator or the like is less likely to be caught. Since the protrusion is directed toward the inner bottom surface of the tray, the degree of engagement between the lid and the protrusion is increased, making it difficult to pry open the lid.

A fifth aspect is directed to the fourth aspect, in which the protrusion is inclined such that front of the protrusion is below rear of the protrusion. According to this configuration, even if the foreign matter such as dust enters the inside of the tray, the foreign matter is less likely to adhere to the protrusion.

A sixth aspect is directed to any one of the first to fifth aspects, in which the lid structure further includes a locking mechanism (61) configured to lock the lid in a closed state by the protrusion, in which the part of the inner peripheral surface of the tray is located in a recess (33) that is recessed to an outer side of a peripheral wall of the tray, in which a bulging portion (51) configured to enter the recess of the tray is formed on an open end side of the lid, in which the protrusion protrudes from the part of the inner peripheral surface of the tray so as to sink inside the recess, and in which a lock hole (54) into which the protrusion enters is formed in the bulging portion. According to this configuration, the lid is locked by the protrusion of the locking mechanism entering the lock hole of the lid, and the lid is unlocked by the protrusion of the locking mechanism being pulled out from the lock hole of the lid. The tray is partially recessed and the locking mechanism is provided. Accordingly, it is not necessary to expand the tray more than necessary, and the fuel filler or the connection port and the locking mechanism can be compactly provided.

Although the present embodiment has been described, a part or all of the above-described embodiment and a modification may be combined as another embodiment.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A lid structure (30) for a vehicle (1) in which a fuel tank or a battery (26) is provided, the lid structure (30) comprising:
a tray (31) configured to cover a periphery of a fuel filler of the fuel tank or a connection port (27) of the battery; and
a lid (41) configured to open and close an opening of the tray through which the fuel filler or the connection port (27) is exposed,
wherein a protrusion (62) protrudes from a part (34) of an inner peripheral surface of the tray (31) to lock the lid (41), and
wherein the part (34) of the inner peripheral surface of the tray (31) is inclined so as to be away from a center line (L1) of the fuel filler or the connection port (27), toward an inner bottom surface (32) of the tray (31).

2. The lid structure (30) according to claim 1,
wherein the part (34) of the inner peripheral surface of the tray (31) is inclined from an opening edge (39) of the tray (31), toward the inner bottom surface (32) of the tray (31).

3. The lid structure (30) according to claim 1 or 2,
wherein the part (34) of the inner peripheral surface of the tray (31) is an upper surface of the tray (31), and
wherein the upper surface of the tray (31) is inclined upward and away from the center line (L1) of the fuel filler or the connection port (27), toward the inner bottom surface (32) of the tray (31).

4. The lid structure (30) according to claim 1 or 2,
wherein a protruding direction (L3) of the protrusion (62) is inclined toward the inner bottom surface (32) of the tray (31) with respect to a normal direction (L2) of the center line (L1) of the fuel filler or the connection port (27).

5. The lid structure (30) according to claim 4,
wherein the protrusion (62) is inclined such that front of the protrusion (62) is below rear of the protrusion (62).

6. The lid structure (30) according to claim 1 or 2, further comprising:
a locking mechanism (61) configured to lock the lid (41) in a closed state by the protrusion (62),
wherein the part (34) of the inner peripheral surface of the tray (31) is located in a recess (33) that is recessed to an outer side of a peripheral wall of the tray (31),
wherein a bulging portion (51) configured to enter the recess (33) of the tray (31) is formed on an open end side of the lid (41),
wherein the protrusion (62) protrudes from the part (34) of the inner peripheral surface of the tray (31) so as to sink inside the recess (33), and
wherein a lock hole (54) into which the protrusion (62) enters is formed in the bulging portion (51).
